# EUROPÄISCHE PATENTSCHRIFT

(11) **EP 0 948 142 B1**
(45) Veröffentlichungstag und Bekanntmachung des Hinweises auf die Patenterteilung: **14.06.2006**
(21) Anmeldenummer: 99104338.1
(22) Anmeldetag: 04.03.1999
(51) Int. Cl.: H04B 3/23, H04M 9/08

(54) **Verfahren zur Steuerung der Schrittweite eines Echokompensators mit adaptivem Filter**
Method for controling the stepsize of an echo canceller with adaptive filter
Procédé pour commander le randeur de pas d'un annuleur d'écho avec filtre adaptatif

(30) Priorität: 03.04.1998 DE 19816358
(43) Veröffentlichungstag der Anmeldung: 06.10.1999
(73) Patentinhaber: Deutsche Telekom AG, 53113 Bonn (DE)
(72) Erfinder: Taege, Peter, 10409 Berlin (DE)

(56) Entgegenhaltungen:
- EP-A- 0 303 101
- DE-A- 3 840 433
- DE-A- 19 525 382
- US-A- 5 467 394

## Beschreibung

Die Erfindung bezieht sich auf die Steuerung der Schrittweite eines Echokompensators mit adaptivem Filter, insbesondere auf die Schätzung des Leistungsübertragungsfaktors g für die Anwendung bei der Schrittweitensteuerung für ein adaptives Filter.

Der optimale Schrittweitenfaktor für den NLMS-Algorithmus, der die Adaption eines FIR-Filters steuert, ist in Annäherung gleich dem Quotienten aus dem Schätzwert für die Leistung des ungestörten Fehlersignals σ_{ε}² und dem Schätzwert für die Leistung des gestörten Fehlersignals σₑ².
Nachfolgend sind, wenn Streuungsquadrate angegeben sind, immer die Schätzwerte gemeint, die z.B. durch zeitliche Mittelung der quadrierten Signalwerte erhalten werden können.
Die Leistung des ungestörten Fehlersignals σ_{ε}² ist nicht meßbar. Sie wird daher auf die Leistung des am Eingang von Modell und unbekanntem System liegenden Eingangssignal x zurückgeführt. Die Leistung des ungestörten Fehlersignals ε ergibt sich aus der Leistung des Eingangssignals x multipliziert mit einem Leistungsübertragungsfaktor g, der die Leistungsübertragung von x nach ε bestimmt. Der Leistungsübertragungsfaktor g wird auch als Schätzwert für den Systemabstand bezeichnet.

In der DE 195 25 382 A1 wird ein Verfahren zur Steuerung der Schrittweite eines Echokompensators mit adaptivem Filter beschrieben, welches insbesondere darauf ausgerichtet ist, einen Schätzwert für den Leistungsübertragungsfaktor g zu bestimmen, der in der Lage ist, einer Vergrößerung zu folgen. Das geschieht über eine Pegelbewertung mittels eines Intervallzählers. Zur Steuerung des Intervallzählers wurde dabei ein Schwellwert S festgelegt. Durch den Schwellwert S wird die Vergrößerung des Schätzwertes für den Leistungsübertragungsfaktor g gesteuert. Die Ermittlung des Schätzwertes für den Leistungsübertragungsfaktor g wird dabei über den Vergleich von Eingangs- und Ausgangsleistung des LRM-Systems vorgenommen. Dabei wird in jedem Abtasttakt des Intervallzählers der Leistungsquotient q aus dem Schätzwert für die Streuung des gestörten Fehlersignals σ²ₑ und dem Schätzwert für die Leistung des Eingangssignals des LRM-Systems σₓ² berechnet und mit dem gespeicherten Leistungsübertragungsfaktor / Schätzwert zur Berechnung der Schrittweite g(k) verglichen. Ist q(k)<g(k-1), dann wird gesetzt g(k)=q(k). Dadurch wird der Schätzwert verkleinert.
Um dem Anstieg des Leistungsübertragungsfaktors g bei Parameteränderungen folgen zu können, wird ein zweiter Kwzzeitschätzwert für den Leistungsübertragungsfaktor g₂(k) gebildet.
Das geschieht dadurch, daß am Beginn eines vorgegebenen Zeitintervalls, der erste Kurzzeitschätzwert für den Leistungsübertragungsfaktor g₁ auf einen vorgegebenen Anfangswert gesetzt wird, und daß der Kurzzeitschätzwert für den ersten Leistungsübertragungsfaktor g₁ dann gleich dem Leistungsquotienten q(k) gesetzt wird, wenn der Leistungsquotient q(k)
a) kleiner als der erste Kurzzeitschätzwert für den Leistungsübertragungsfaktor g₁(k-1) ist, und wenn
b) die Eingangsleistung den Schwellwert S überschreitet.
Dabei zählt gleichzeitig ein Intervallzähler. Das Ende des Meßintervalls ist erreicht, wenn der Intervallzähler ausgehend von einem Anfangswert von 0 den Endstand erreicht hat. Dann wird ein neuer Schätzwert für den Leistungsübertragungsfaktor g(k) aus dem bisherigen Schätzwert für den Leistungsübertragungsfaktor g(k-1) und dem ersten Kwzzeitschätzwert für den Leistungsübertragungsfaktor g₁(k) gebildet. Der Intervallzähler zählt nur dann, wenn das Eingangssignal größer als ein bestimmter Bruchteil seines Spitzenwertes ist.
Dieses bekannte Verfahren hat folgende Nachteile:
1. Große Störungen durch den nahen Teilnehmer führen trotz der dann reduzierten Schrittweite zu einem Fehlabgleich, da dann der Kurzzeitschätzwert für den ersten Leistungsübertragungsfaktor g₁ ständig größer wird.
2. Bei sehr kleinem Eingangssignal kann der Schätzwert für den Leistungsquotienten q bei Rechnern mit Festkommaverarbeitung leicht zu klein werden, damit wird dann relativ lange eine zu kleine Schrittweite eingestellt.
3. Fehlt für längere Zeit das Signal von der Gegenstelle bzw. vom fernen Teilnehmer, während der oder die Teilnehmer im nahen Raum sprechen, dann bleibt die Schrittweite bei wieder einsetzendem Signal vom fernen Raum zunächst klein, auch wenn sich inzwischen die Parameter des LRM-Systems, Lautsprecher-Raum-Mikrofon-Systems, geändert haben.

Die Erfindung ist auf die Vermeidung der oben beschriebenen Nachteile und damit eine weitere Verbesserung von Freisprecheinrichtungen der o.g. Art in bezug auf die Störempfindlichkeit und die Abgleichgeschwindigkeit ausgerichtet..

Die erfindungsgemäße Aufgabe besteht darin, unter der Voraussetzung, daß das Signal vom fernen Teilnehmer über einen längeren Zeitraum fehlt, und daß sich die Parameter des LRM-Systems in diesem Zeitraum ändern, den Schätzwert für den Leistungsübertragungsfaktor g den neuen Gegebenheiten anzupassen.

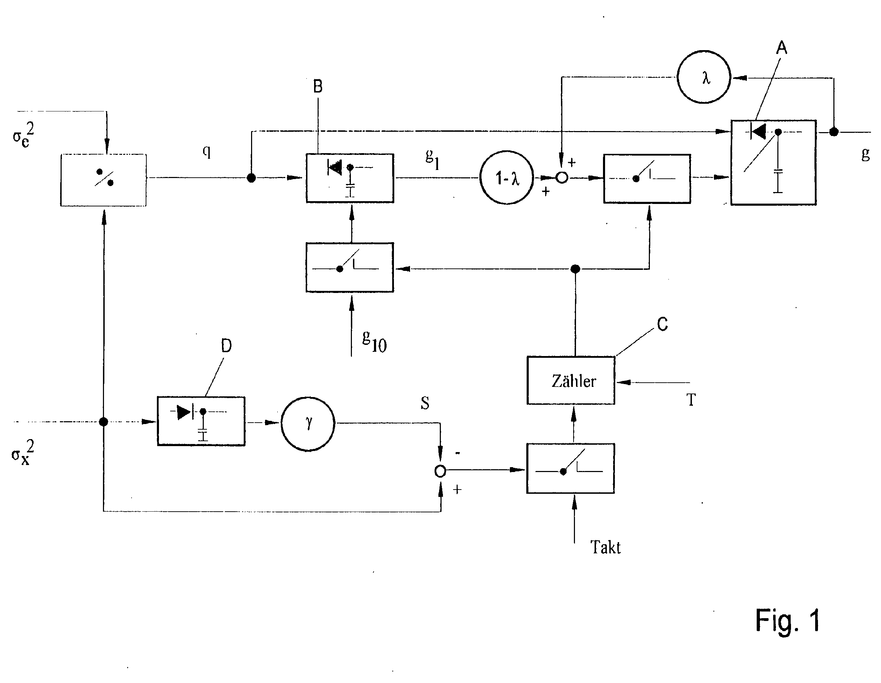

Voraussetzungen für die Anwendung des neuen Verfahrens ist, daß der Schwellwert S nicht als Teil des Spitzenwerts des Eingangssignals definiert ist, sondern gleich dem Schätzwert für die Leistung des Ausgangssignals des LRM-Systems σ_{y}² gesetzt wird. Dadurch wird erreicht, daß die Zeitabschnitte mit großen Störungen bei gleichzeitig kleinem Eingangssignal nicht zum Meßintervall dazu gerechnet werden. Voraussetzung für die Anwendung des beschriebenen Verfahrens ist ein Übertragungsfaktor des LRM-Systems < 1. In diesem Fall muß bei kleinen Störungen immer σ_{y}² < σₓ² sein. Die Nichterfüllung dieser Bedingung deutet auf größere Störungen hin, unter deren Einfluß die Schätzung des Leistungsübertragunsfaktors g mit größeren Fehlern behaftet sein würde und daher nicht durchzuführen ist.
Dem erfindungsgemäßen Verfahren liegt die aus DE 195 25 382 bekannte Lösung zugrunde, bei der die Schätzung der Werte für den Leistungsübertragungsfaktor g und den ersten Kurzzeitschätzwert für den Leistungsübertragungsfaktor gₜ wie in Fig.1 abgebildet, über zwei Minimumschätzer A und B erfolgt, an deren Eingängen der Leistungsquotient q liegt. Die Werte für den Leistungsübertragungsfaktor g und den ersten Kurzzeitschätzwert für den Leistungsübertragungsfaktor g₁ folgen also den Minima des Leistungsquotienten q und können sich zunächst nur verkleinern. Eine eventuell erforderliche Vergrößerung wird dadurch ermöglicht, daß der Intervallzähler C bei seinem Start den ersten Kurzzeitschätzwert für den Leistungsübertragungsfaktor g₁ mit einem Anfangswert g₁₀ initialisiert. Der Intervallzähler C zählt nur die Zeiten, in denen die Eingangsleistung größer als ein vorbestimmter Bruchteil γ ihres mittels eines Spitzenwertschätzers D gewonnenen Spitzenwertes ist. Wenn das Meßintervall beendet ist, dann wird ein neuer Schätzwert für den Leistungsübertragungsfaktor g gemäß der Beziehung g(k)=λg(k-1)+(1-λ)g₁(k) gebildet. Der erste Kurzzeitschätzwert für den Leistungsübertragungsfaktor g1 wird mit seinem Anfangswert initialisiert und es wird ein neues Meßintervall gestartet.

Dem erfindungsgemäßen Verfahren, das auf eine weitere Verbesserung des Verfahrens nach DE 195 25 382 ausgerichtet ist, liegt die Überlegung zugrunde, daß die Wahrscheinlichkeit, daß sich während der Zeitdauer des Fehlens eines Eingangssignals von der Gegenseite bei gleichzeitiger Änderung der Sprachaktivität im nahen Raum die Parameter des LRM-Systems ändern, mit steigender Zeit zunimmt. Das führt dazu, daß bei wieder einsetzendem Eingangssignal von der Gegenseite der Schätzwert für den Leistungsübertragungsfaktor g zu klein ist und dadurch ein relativ hohes Echo auftritt.

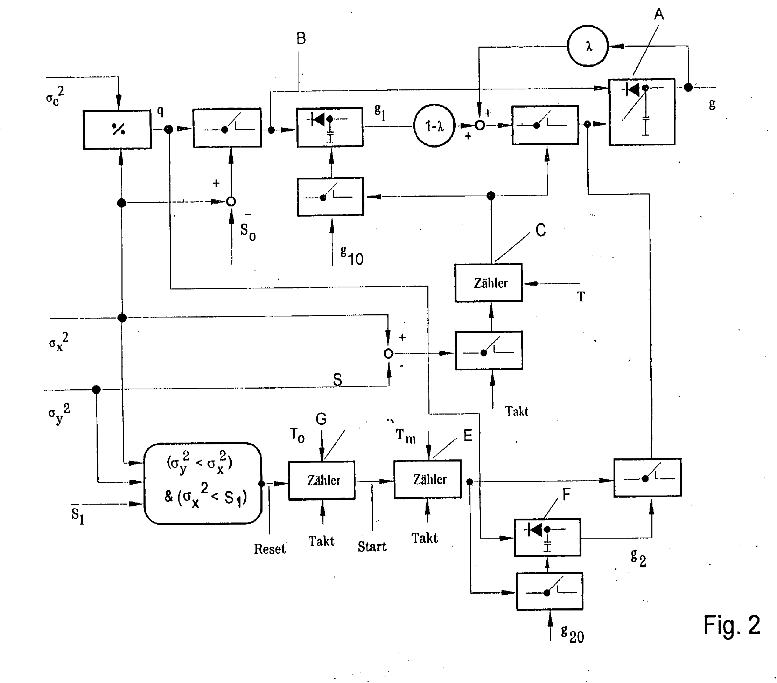

Das erfindungsgemäße Verfahren unterscheidet sich von dem aus DE 195 25 382 bekannten Verfahren darin,
- daß der bereits bekannte Schwellwert S gleich dem Schätzwert für die Leistung des Ausgangssignals des LRM-Systems σ_{y}² gesetzt wird,
- daß zur Verhinderung der Schätzung bei zu kleinen Eingangspegeln ein weiterer Schwellwert zur Verhinderung der Schätzung bei zu kleinen Eingangspegeln S₀ gesetzt wird, und
- daß ein zweiter Kurzzeitschätzwert für den Leistungsübertragungsfaktor g₂ ermittelt wird, um bei Parameteränderung dem Anstieg des Leistungsübertragungsfaktors g besser folgen zu können.
   Das erfindungsgemäße Verfahren wird nachfolgend anhand von Fig. 2 näher beschrieben.
   Mittels eines Zählers für die Prüfung der Zeitdauer der Ruhephase der Gegenseite G wird geprüft, ob für eine für das Fehlen eines Signals von der Gegenseite festgelegte Zeitdauer T₀ der Schätzwert für die Leistung des Ausgangssignals des LRM-Systems σ_{y}² kleiner als der Schätzwert für die Leistung des Eingangssignals des LRM-Systems σₓ² war und ob der Schätzwert für die Leistung des Eingangssignals des LRM-Systems σₓ² kleiner als der Schwellwert zur Bestimmung der Ruhephase der Gegenseite S1 war. Bei Verletzung einer dieser Bedingungen wird dieser Schätzvorgang sofort abgebrochen.
   Wenn die Bedingungen erfüllt sind, startet über einen Zähler E die Meßzeit für die Schätzung des zweiten Kurzzeitschätzwertes für den Leistungsübertragungsfaktor g₂. Am Anfang des Meßintervalls wird der Minimumschätzer F für die Ermittlung des Kurzzeitschätzwertes für den Leistungsübertragungsfaktor g₂ mit einem Anfangswert g₂₀ initialisiert. Während der Meßzeit Tₘ für die Schätzung des Kurzzeitschätzwertes für den Leistungsübertragungsfaktor g₂ folgt der Meßwert dem Minimum des Leistungsquotienten q. Nach Ablauf der Meßzeit Tₘ für die Schätzung des zweiten Kurzzeitschätzwertes für den Leistungsübertragungsfaktor g₂ wird der für g₂ ermittelte Wert nach g übertragen.
   Das heißt, daß nach Abschluß des Schätzvorganges für den Schätzwert des Leistungsübertragungsfaktors g der neu ermittelte zweite Kurzzeitschätzwert für den Leistungsübertragungsfaktor g₂ gesetzt wird. Damit steht nach relativ kurzer Zeit ein neuer Wert für den Leistungsübertragungsfaktor g zur Verfügung, der größer ist und damit zu einem größeren Schrittweitenfaktor führt, wenn sich inzwischen die Parameter des LRM-Systems geändert haben.
   Für die Feststellung einer Parameteränderung des LRM-Systems während der für das Fehlen eines Signals von der Gegenseite festgelegten Zeitdauer T₀ gibt es kein Kriterium. Es wird von der Annahme ausgegangen, daß die Wahrscheinlichkeit der Veränderung der Parameter um so größer ist, je länger die Gegenseite geschwiegen hat. Die Festlegung der Zeitdauer für das Fehlen eines Signals von der Gegenseite T₀ ist außerdem noch von der maximalen Geschwindigkeit abhängig mit der sich die Parameter des LRM-Systems ändern können. Da es sich in der Regel um Menschen handelt, deren Bewegungen die Parameter des LRM-Systems verändern, wird die Zeitdauer für das Fehlen eines Signals von der Gegenseite T₀ auf etwa 50 ms festgelegt. Der Schwellwert zur Bestimmung der Ruhephase der Gegenseite S₁ muB so gewählt werden, daß eine sichere Unterscheidung der Fälle,
- Gegenseite schweigt und
- Gegenseite spricht,
möglich ist.
In einer möglichen Ausführungsform wird der Schwellwert zur Bestimmung der Ruhephase der Gegenseite S₁ so festgelegt, daß er etwa 30 dB unter dem Maximalwert der Eingangsleistung liegt.
Bei Nichterfüllung der Bedingungen σ_{y}² < σₓ² und σₓ² < S₁ wird der Zähler für die Prüfung der Zeitdauer der Ruhephase der Gegenseite G wieder rückgesetzt. Das heißt, die Schätzung wird sofort vollständig abgebrochen, wenn der Schätzwert für die Leistung des Ausgangssignals des LRM-Systems σ_{y}² größer als der Schätzwert für die Leistung des Eingangssignals des LRM-Systems σₓ² ist, oder wenn der Schätzwert für die Leistung des Eingangssignals des LRM-Systems σₓ² größer als der Schwellwert zur Bestimmung der Ruhephase der Gegenseite S₁ ist.
Der Leistungsübertragungsfaktor g wird in diesem Fall wie bereits bekannt, über den ersten Kurzzeitschätzwert für den Leistungsübertragungsfaktors g₁ gebildet.

Wenn die o.g. Bedingung erfüllt ist, dann startet erfindungsgemäß die Ermittlung des zweiten Kurzzeitschätzwertes für den Leistungsübertragungsfaktor g₂ über eine bestimmte Meßzeit Tₘ für die Schätzung von g, die beispielsweise auf 0,15 s festgelegt ist. Dazu wird, ausgehend von einem Anfangswert g₂₀, für den zweiten Kurzzeitschätzwert für den Leistungsübertragungsfaktor g₂ für die Dauer dieser Meßzeit Tₘ (z. B. 0,15 s) der Leistungsquotient q(k) mit dem zweiten Kurzzeitschätzwert für den Leistungsübertragungsfaktor g₂(k-1) verglichen. Ist der Leistungsquotient q(k) kleiner als der zweite Kurzzeitschätzwert für den Leistungsübertragungsfaktor g₂(k-1), dann wird der zweite Kurzzeitschätzwert für den Leistungsübertragungsfaktor g₂(k) gleich dem Leistungsquotienten q(k) gesetzt. Es gilt, wenn q(k)<g₂(k-1), dann g₂(k)=q(k).
Ist die Meßzeit abgelaufen, dann wird als Leistungsübertragungsfaktor g(k) der neue zweite Kurzzeitschätzwert für den Leistungsübertragungsfaktor g₂(k) gesetzt. Der Intervallzähler, der die Generierung des Schätzwertes des ersten Kurzzeitschätzwertes für den Leistungsübertragungsfaktor g₁ steuert, wird mit einem negativen Wert initialisiert.
Statt dem Schätzwert für die Leistung des Ausgangssignals des LRM-Systems α_{y}² kann man auch den Schätzwert für die Leistung des gestörten Fehlersignals σₑ² einsetzen. Die Schätzung der Streuungsquadrate durch die zeitlichen Mittelwerte der quadrierten Signale führt bei Festkommaverarbeitung dazu, daß im Bereich kleiner Signalwerte größere Fehler entstehen. Durch die Quadrierung entstehen sehr kleine Werte, die durch die Quantisierung verloren gehen können. Dadurch werden die Schätzwerte immer zu klein.
Bei Festkommaverarbeitung ist es günstiger, die quadrierten zeitlichen Mittelwerte der Absolutwerte der Signale zu verwenden.

### Bezugszeichenaufstellung

- S: Schwellwert
- S₀: Schwellwert zur Verhinderung der Schätzung bei zu kleinen Eingangspegeln
- S₁: Schwellwert zur Bestimmung der Ruhephase der Gegenseite
- σ_{y}²: Schätzwert für die Leistung des Ausgangssignals des LRM-Systems
- σₓ²: Schätzwert für die Leistung des Eingangssignals des LRM-Systems
- σₑ²: Schätzwert für die Leistung des gestörten Fehlersignals
- σ_{ε}²: Schätzwert für die Leistung des ungestörten Fehlersignals
- g(k),: Leistungsübertragungsfaktor (Schätzwert zur Berechnung der Schrittweite)
- g₁(k): erster Kurzzeitschätzwert für den Leistungsübertragungsfaktor
- g₂(k): zweiter Kurzzeitschätzwert für den Leistungsübertragungsfaktor (Schätzwert für den Systemabstand)
- T₀: für das Fehlen eines Signals von der Gegenseite festgelegte Zeitdauer
- Tₘ: Meßzeit (für die Schätzung von g)
- x: Eingangssignal des LRM-Systems
- y: Ausgangssignal des LRM-Systems
- e: gestörtes Fehlersignal
- ε: ungestörtes Fehlersignal
- q: Leistungsquotient
- λ: Glättungsfaktor
- k: Zeitindex
- A: Minimumschätzer
- B: Minimumschätzer
- C: Intervallzähler
- D: Spitzenwertschätzer .
- G: Zähler für die Prüfung der Zeitdauer der Ruhephase der Gegenseite
- E: Zähler für die Meßzeit von g2
- F: Minimumschätzer
- LRM-System: Lautsprecher-Raum-Mikrofon-System

## Patentansprüche

1. Verfahren zur Steuerung der Schrittweite eines Echokompensators mit adaptivem Filter, dessen Koeffizienten durch den NLMS-Algorithmus automatisch angepaßt werden, bei dem zur Schätzung des Leistungsübertragungsfaktors (g), aus den Schätzwerten für die Streuung von Fehler- und Eingangssignal der Leistungsquotient (q) gebildet, und ein neuer Schätzwert für den Leistungsübertragungsfaktor g ermittelt wird, bei dem mittels eines Intervallzählers eine Pegelbewertung zur Ermittlung der Zahl der Abtastungen durchgeführt wird, bei welchen der Eingangspegel bzw. die Eingangsleistung einen Schwellwert (S) überschreitet, daß bei Überschreitung des Schwellwerts (S) g)(k)=min{g}(k-1),q(k)} gesetzt und der Intervallzähler inkrementiert wird, und daß am Ende des Intervalls der Leistungsübertragungsfaktor g entsprechend der Beziehung g(k) =λ g(k-1)+(1-λ) g₁(k) gesetz, WO λ einen Glättungsfaktor darstellt der Intervallzähler (C) auf 0 gesetzt und der erste Kurzzeitschätzwert für den Leistungsübertragungsfaktor g₁ mit einem Anfangswert initialisiert wird,
**dadurch gekennzeichnet,**
- **daß** der Schwellwert (S) gleich dem Schätzwert für die Leistung des Ausgangssignals des LRM-Systems (σ_{y}²) gesetzt wird, und daß der Schätzwert für den Leistungsübertragungsfaktor (g) nur dann verkleinert wird, wenn der Schätzwert für die Leistung des Eingangssignals des LRM-Systems (σₓ²) einen Schwellwert zur Verhinderung der Schätzung bei zu kleinen Eingangspegeln (S₀) überschreitet,
- **daß** anhand eines ständigen Schwellwertvergleichs des Schätzwertes für die Leistung des Eingangssignals des LRM-Systems (σₓ²) mit einem Schwellwert zur Bestimmung der Ruhephase der Gegenseite (S1) festgestellt wird, ob ein Sprachsignal von der Gegenseite vorliegt.
- **daß** parallel dazu über einen Zähler für die Prüfung der Zeitdauer der Ruhephase der Gegenseite (G) geprüft wird, ob der Schätzwert für die Leistung des Eingangssignals des LRM-Systems (σₓ²) über eine für das Fehlen eines Signals von der Gegenseite festgelegte Zeitdauer (T₀) kleiner als der Schwellwert zur Bestimmung der Ruhephase der Gegenseite (S1) und größer als der Schätzwert für die Leistung des Ausgangssignals des LRM-Systems (σ_{y}²) war,
- **daß** für den Fall, daß diese Bedingung erfüllt ist, ein Algorithmus zur Anpassung der Schrittweite nach einer für das Fehlen des Sprachsignals von der Gegenseite festgelegten Zeitdauer (T₀) startet, wenn ein erstes Sprachsignal von der Gegenseite empfangen wird, wobei über eine Meßzeit (Tₘ) für die Schätzung des Leistungsübertragungsfaktors (g) ein mit einem Anfangswert (g₂₀) gesetzter zweiter Kurzzeitschätzwert für den Leistungsübertragungsfaktor (g₂) nach der Beziehung g₂(k)=min{g₂(k-1),q(k)} gebildet wird, welcher sich durch die Anpassung an die Minima des Leistungsquotienten q ständig verkleinert, und
- **daß** bei Ablauf der Meßzeit (Tₘ) für die Schätzung des Leistungsübertragungsfaktors (g) der neu ermittelte Schätzwert für den zweiten Kurzzeitschätzwert des Leistungsübertragungsfaktors (g₂) als neuer Leistungsübertragungsfaktor (g) gesetzt und das Meßintervall des Intervallzählers (C) einmalig vergrößert wird

2. Verfahren nach Anspruch 1, **dadurch gekennzeichnet, daß** die für das Fehlen eines Signals von der Gegenseite festgelegte Zeitdauer (T₀) auf eine Zeitdauer von 50 ms festgelegt wird.

3. Verfahren nach Anspruch 1, **dadurch gekennzeichnet, daß** der Algorithmus zur Schätzung des Leistungsübertragungsfaktors (g) über eine Meßzeit (Tₘ) läuft, welche größer als die Einschwingzeit der Leistungsschätzer für die Größen σₑ², σₓ² und σ_{y}² ist und im Zehntel-Sekunden-Bereich liegt.

4. Verfahren nach Anspruch 1, **dadurch gekennzeichnet, daß** der Schwellwert zur Bestimmung der Ruhephase der Gegenseite (S1) auf einen Wert von 30 dB unter dem Maximalwert des Schätzwertes für die Leistung des Eingangssignals des LRM-Systems (σₓ²) festgelegt wird.

5. Verfahren nach Anspruch 1, **dadurch gekennzeichnet, daß** der Schwellwert zur Verhinderung der Schätzung bei zu kleinen Eingangspegeln (S₀) auf annähernd 40 dB des Schätzwertes für die Leistung des Eingangssignals des LRM-Systems (σₓ²) festgelegt wird.

## Claims

1. Method for controlling the step size of an echo canceller with an adaptive filter whose coefficients are automatically adjusted with the NLMS algorithm, wherein in order to estimate the power transfer factor (g), the power ratio (q) of the estimated values of the dispersion of the error signal and the input signal is obtained and a new estimated value for the power transfer factor g is determined, wherein a level evaluation is performed by means of an interval counter to determine the number of samples in which the input level or the input power exceeds a threshold (S), that when the threshold (S) is exceeded, g₁(k) is set = min{g₁(k-1), q(k)} and the interval counter is incremented, and in that at the end of the interval, the power transmission factor g is set according to the formula g(k) = λ g(k-1)+(1- λ) g₁(k), where λ represents a smoothing factor, the interval counter (C) is set to 0 and the first short-term estimated value for the power transmission factor g₁ is initialized to a starting value,
**characterized in that**
- the threshold value (S) is set equal to the estimated value for the power of the output signal of the LRM system (σ_{y}²), and **in that** the estimated value for the power transfer factor (g) is only reduced when the estimated value for the power of the input signal of the LRM system (σₓ²) exceeds a threshold for preventing estimation at excessively low input levels (S₀),
- **in that** the determination of whether a speech signal from the opposite side is present is made with the aid of a continuous threshold comparison of the estimated value for the power of the input signal of the LRM system (σₓ²) with a threshold value for identifying the quiet phase of the opposite side (S1),
- **in that**, in parallel therewith, a determination is made using a counter for testing the duration of the quiet phase of the opposite side (G) as to whether the estimated value for the power of the input signal of the LRM system (σₓ²) was below the threshold for identifying the quiet phase of the opposite side (S1) and above the estimated value for the power of the output signal of the LRM system (σ_{y}²) during a time period (T₀) defined for the absence of a signal from the opposite side,
- **in that**, in the event this condition is met, an algorithm for adapting the step size starts when a first voice signal is received from the opposite side after a time period (T₀) defined for the absence of a voice signal from the opposite side has elapsed, wherein, over a measurement time (Tₘ) for the estimation of the power transfer factor (g), a second short-term estimated value for the power transfer factor (g₂) that is set to an initial value (g₂₀) is determined according to the formula g₂(k) = min {g₂(k-1), q(k)}, which steadily decreases due to the adaptation to the minima of the power ratio q, and
- **in that** once the measurement time (Tₘ) for the estimation of the power transfer factor (g) has elapsed, the newly determined estimated value for the second short-term estimated value for the power transfer factor (g₂) is set as the new power transfer factor (g), and the measurement interval of the interval counter (C) is increased once.

2. Method according to claim 1, **characterized in that** the time period (T₀) defined for the absence of a voice signal from the opposite side is defined to be a time period of 50 ms.

3. Method according to claim 1, **characterized in that** the algorithm for estimating the power transfer factor (g) runs over a measurement time (Tₘ) that is longer than the transient response time of the power estimator for the quantities σₑ², σₓ², and σ_{y}² and is in the range of tenths of a second.

4. Method according to claim 1, **characterized in that** the value of the threshold for identifying the quiet phase of the opposite side (S1) is defined to be a value of 30 dB below the maximum value of the estimated value for the power of the input signal of the LRM system (σₓ²).

5. Method according to claim 1, **characterized in that** the value of the threshold for preventing estimation at excessively low input levels (S₀) is defined as within approximately 40 dB of the estimated value for the power of the input signal of the LRM system (σₓ²).

## Revendications

1. Procédé pour commander la longueur de pas d'un compensateur d'écho avec filtre adaptatif, dont les coefficients sont adaptés automatiquement par l'algorithme NLMS, selon lequel pour l'estimation du facteur de transmission de puissance (g), le quotient de puissance (q) est formé à partir des valeurs estimées pour la dispersion des signaux d'entrée et d'erreur et une nouvelle valeur estimée est déterminée pour le facteur de transmission de puissance g, selon lequel, au moyen d'un compteur d'intervalles, il est effectué une estimation de niveau pour la détermination du nombre des balayages, pour lesquels le niveau d'entrée ou la puissance d'entrée dépasse une valeur seuil (S), de sorte que, lorsque du la valeur seuil (S) est dépassée, on établit g₁(k)=min{g₁(k-1),q(k)} et le compteur d'intervalles est incrémenté et de sorte qu'à la fin de l'intervalle, le facteur de transmission de puissance g est établi selon la relation g(k) = λg(k-1) + (1-λ) g₁(k), où λ représente un facteur de lissage, le compteur d'intervalles (C) est mis à 0 et la première valeur estimée sur une courte durée pour le facteur de transmission de puissance g₁ est initialisée avec une valeur initiale, **caractérisé en ce que**
- la valeur seuil (S) est établie à la valeur estimée pour la puissance du signal de sortie du système LRM (σ_{y}²) et **en ce que** la valeur estimée pour le facteur de transmission de puissance (g) n'est réduite que si la valeur estimée pour la puissance du signal d'entrée du système LRM (σₓ²) dépasse une valeur seuil destinée à empêcher l'estimation en cas de niveaux d'entrée trop bas (S₀),
- à l'aide d'une comparaison constante de valeur seuil de la valeur estimée pour la puissance du signal d'entrée du système LRM(σₓ²) avec une valeur seuil pour la détermination de la phase de repos de la partie opposée (S1), il est constaté si un signal vocal de la partie opposée existe,
- parallèlement, il est vérifié à l'aide d'un compteur servant au contrôle de la durée de la phase de repos de la partie opposée (G) si la valeur estimée pour la puissance du signal d'entrée du système LRM (σₓ²) était, sur une durée (T₀) fixée pour l'absence de signal de la partie opposée, inférieure à la valeur seuil pour la détermination de la phase de repos de la partie opposée (S1) et supérieure à la valeur estimée pour la puissance du signal de sortie du système LRM (σ_{y}²),
- pour le cas où cette condition est satisfaite, un algorithme pour l'adaptation de la longueur de pas est lancé après une durée (T₀) fixée pour l'absence du signal vocal de la partie opposée quand un premier signal vocal est reçu par la partie opposée, une seconde valeur estimée sur une courte durée pour le facteur de transmission de puissance (g₂), établie à une valeur initiale (g₂₀), étant formée selon la relation g₂(k) = min {g₂(k-1),q(k)} pendant un temps de mesure (Tₘ) pour l'estimation du facteur de transmission de puissance (g), valeur qui diminue constamment du fait de l'adaptation aux minima du quotient de puissance q et
- après écoulement du temps de mesure (Tₘ) pour l'estimation du facteur de transmission de puissance (g), la valeur estimée à nouveau déterminée pour la seconde valeur, estimée sur une courte durée, du facteur de transmission de puissance (g₂)est établie en tant que nouveau facteur de transmission de puissance (g) et l'intervalle de mesure du compteur d'intervalle (C) est augmenté une seule fois.

2. Procédé selon la revendication 1, **caractérisé en ce que** la durée (T₀) fixée pour l'absence de signal de la partie opposée est fixée à une durée de temps de 50 ms.

3. Procédé selon la revendication 1, **caractérisé en ce que** l'algorithme pour l'estimation du facteur de transmission de puissance (g) se déroule sur un temps de mesure (Tₘ) qui est supérieur au temps de montée de l'estimateur de puissance pour les grandeurs σₑ², σₓ² et σ_{y}² et est de l'ordre de quelques dixièmes de secondes.

4. Procédé selon la revendication 1, **caractérisé en ce que** la valeur seuil pour la détermination de la phase de repos de la partie opposée (S1) est fixée à une valeur de 30 dB en dessous de la valeur maximale de la valeur estimée pour la puissance du signal d'entrée du système LRM (σₓ²).

5. Procédé selon la revendication 1, **caractérisé en ce que** la valeur seuil pour empêcher l'estimation à des niveaux d'entrée trop bas (S₀) est fixée à environ 40 dB de la valeur estimée pour la puissance du signal d'entrée du système LRM (σₓ²).
